# EUROPEAN PATENT APPLICATION

(11) **EP 1 820 671 A2**
(43) Date of publication of application: **22.08.2007**
(21) Application number: 07002618.2
(22) Date of filing: 07.02.2007
(51) Int. Cl.: B60C 23/04

(54) **System of detecting tire information**

(30) Priority: 17.02.2006 JP 2006040497
(71) Applicant: ALPS ELECTRIC CO., LTD., Tokyo 145-8501 (JP)
(72) Inventor: Masudaya, Hideki, Ota-ku Tokyo 145-8501 (JP)
(74) Representative: Klunker . Schmitt-Nilson . Hirsch

(57) **Abstract**

A system of detecting tire information includes a measured value transmitter that includes a first resonator with a pressure sensor and a second resonator without the pressure sensor and that is mounted in a tire of a vehicle, and a controller that is provided in the body of the vehicle and that transmits a signal used for resonance of the first and second resonators to the measured value transmitter and receives signals associated with the resonant frequencies of the first and second resonators from the measured value transmitter to calculate a measured value on the basis of the resonant frequencies of the first and second resonators, extracted from both of the signals. In the measured value transmitter, characteristics of a piezoelectric single-crystal oscillator included in the first resonator are made closely analogous to those of a piezoelectric single-crystal oscillator included in the second resonator.

## Description

### BACKGROUND OF THE INVENTION

### 1. Field of the Invention

The present invention relates to systems of detecting tire information and, more particularly, to a system of detecting tire information including a pressure concerning a tire used for an automobile or the like.

### 2. Description of the Related Art

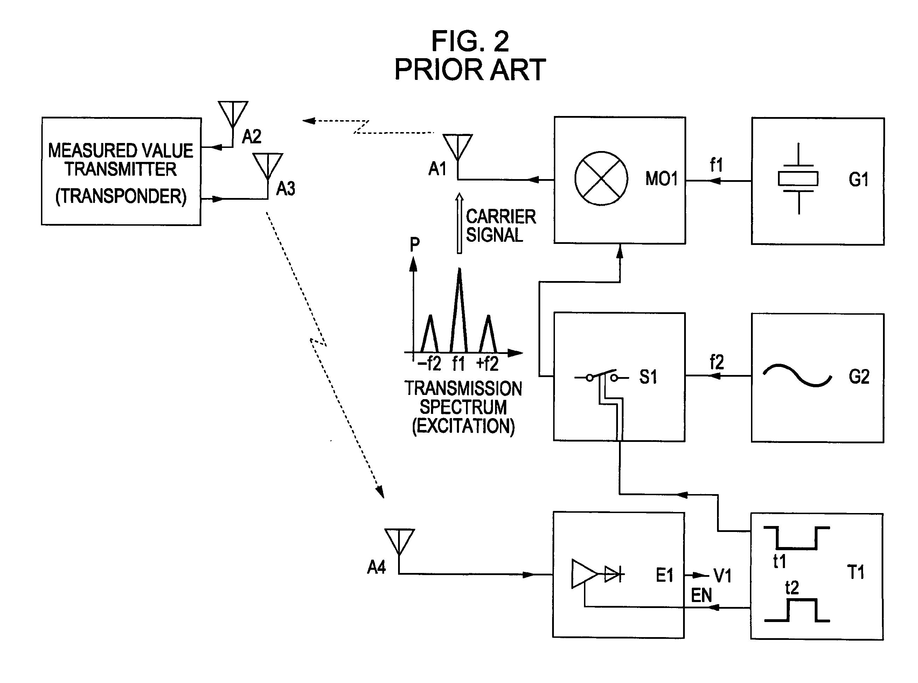

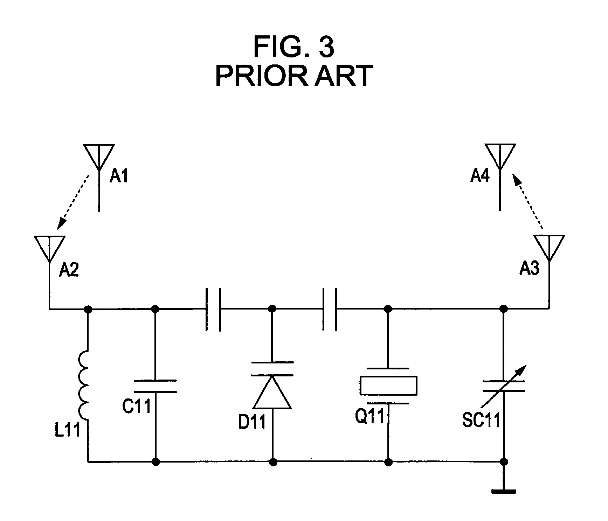

Hitherto, radio transmission systems have been proposed, in which measured values, such as pressures, of tires used for automobiles or the likes are transmitted by radio waves to controllers provided in the bodies of the automobiles and the transmitted measured values are evaluated to, for example, send out warning messages for the drivers (for example, refer to US Patent No.6,378,360). In such a radio transmission system, a controller shown in Fig. 2 is provided in the body of the vehicle and a measured value transmitter (transponder) shown in Fig. 3 is provided in a tire of the vehicle.

As shown in Fig. 2, the controller includes a carrier wave oscillator G1, a modulator MO1, and an oscillator G2. The carrier wave oscillator G1 generates a carrier wave having a frequency f1 of about 2.4 GHz and supplies the generated carrier wave to the modulator MO1. The oscillator G2 outputs an oscillation signal for modulation. The oscillator G2 supplies the oscillation signal having a frequency f2 close to the resonant frequency of a resonator in the transponder, described below, to the modulator MO1. In the modulator MO1, the carrier wave supplied from the carrier wave oscillator G1 is amplitude-modulated in accordance with the oscillation signal supplied from the oscillator G2. The amplitude-modulated high-frequency signal of 2.4 GHz is amplified by an amplifier (not shown) and the amplified high-frequency signal is emitted from an antenna A1 near the tire.

The controller also includes a switch S1, a receiver E1, and a timer T1. The switch S1 is used to switch the availability of the amplitude modulation in the modulator MO1. The receiver E1 receives a high-frequency signal emitted from the transponder to calculate a measured value V1, such as a pressure in the tire. The timer T1 controls the switching timing in the switch S1 and the state of the receiver E1. After the availability of the amplitude modulation of the carrier wave is switched in accordance with the switching timing controlled by the timer T1 and the amplitude-modulated high-frequency signal is transmitted for a predetermined time period, the amplitude modulation is stopped at a time t1 and the non-modulated carrier wave is transmitted since the time t1. The receiver E1 is enabled at a time t2 about one millisecond or less after the time t1 to receive the high-frequency signal supplied from the transponder through an antenna A4.

As shown in Fig. 3, the transponder includes a low-pass filter L11/C11, a varactor diode (hereinafter simply referred to as a "diode") D11, a capacitive pressure sensor (hereinafter simply referred to as a "pressure sensor") SC11, and a resonator including a crystal oscillator Q11. The diode D11 functions as a modulator-demodulator. The capacitance of the pressure sensor SC11 is varied with the pressure in the tire. The crystal oscillator Q11 is excited by a frequency component included in the high-frequency signal supplied from the controller. The carrier wave of 2.4 GHz is removed from the high-frequency signal supplied from the controller by the low-pass filter L11/C11, and the high-frequency signal is demodulated by the diode D11. As a result, a signal having a frequency equal to that of the oscillation signal supplied from the oscillator G2 is extracted. Since the resonant frequency of the resonator is close to the frequency of the oscillation signal supplied from the oscillator G2, the resonator is excited by the extracted signal. This excitation generates a signal having the resonant frequency of the resonator. Since the resonant frequency of the resonator is varied with a variation in the capacitance of the pressure sensor SC11 caused by the pressure in the tire, the generated signal having the resonant frequency is also affected by the pressure in the tire.

As described above, after transmitting the amplitude-modulated high-frequency signal, the controller stops the amplitude modulation and transmits the non-modulated carrier wave. The resonator in the transponder continues to oscillate for about one millisecond or more even after the amplitude modulation is stopped. Accordingly, the non-modulated carrier wave supplied from the controller is amplitude-modulated by the diode D11 in accordance with the signal having the resonant frequency of the resonator and the amplitude-modulated signal is emitted from an antenna A3. The receiver E1 in the controller receives the amplitude-modulated high-frequency signal through the antenna A4 and extracts the signal having the resonant frequency through a demodulator (not shown) to calculate the measured value V1, such as the pressure in the tire.

In the radio transmission system disclosed in US Patent No. 6,378,360, the transponder may further include a resonator including a reference crystal oscillator or may be provided with another resonator to transmit a measured value, such as a temperature or a structural stress of the tire, and the controller may calculate the measured value.

However, the resonant frequency of the resonator included in the transponder in the radio transmission system described above is not only affected by the tire information whose measured value is to be yielded, such as the pressure in the tire, but also varied with factors, such as the temperature in the tire. Consequently, there is a problem in that a variation in the temperature in the tire can cause an error of the measured value to inhibit accurate detection of the measured value.

When the transponder further includes the reference resonator and the measured value, such as the pressure in the tire, is calculated, the temperature characteristics and the deterioration characteristics with age are varied between the resonators. Also in this case, there is a problem in that an error of the measured value can be caused to inhibit accurate detection of the measured value.

### SUMMARY OF THE INVENTION

Accordingly, it is an object of the present invention to provide a system of detecting tire information, which is capable of reducing any effect of information other than the tire information to be measured to accurately detect the tire information, such as the pressure in the tire.

According to an embodiment of the present invention, a system of detecting tire information includes a measured value transmitter that includes a first resonator with a pressure sensor and a second resonator without the pressure sensor and that is mounted in a tire of a vehicle and a controller that is provided in the body of the vehicle and that transmits a signal used for resonance of the first and second resonators to the measured value transmitter and receives from the measured value transmitter a signal associated with the resonant frequency of the first resonator and a signal associated with the resonant frequency of the second resonator to calculate a measured value on the basis of the resonant frequencies of the first and second resonators, extracted from both of the signals. In the measured value transmitter, characteristics of a piezoelectric single-crystal oscillator included in the first resonator are made closely analogous to those of a piezoelectric single-crystal oscillator included in the second resonator.

With this configuration, since the characteristics of the piezoelectric single-crystal oscillator in the first resonator are made closely analogous to those of the piezoelectric single-crystal oscillator in the second resonator, the resonant frequencies of both of the resonators are similarly affected by any variation in the temperature in the tire or any deterioration with age of the piezoelectric single-crystal oscillators. The calculation of the measured value in accordance with the resonant frequencies of the first and second resonators allows the effect of factors including the temperature in the tire to be reduced to accurately detect the measured value, such as the pressure in the tire.

In the system of detecting tire information, it is preferred that the piezoelectric single-crystal oscillators included in the first and second resonators be crystal oscillators. With this configuration, the crystal oscillators have a higher Q factor and the return frequency is rather constant, so that it is possible to realize stable measurement, compared with a case where other piezoelectric single-crystal oscillators are used.

In the system of detecting tire information, it is preferred that crystal blanks used as the crystal oscillators included in the first and second resonators be manufactured from a single wafer. Manufacturing the crystal blanks used as the crystal oscillators from a single wafer allows the characteristics of the crystal oscillator used in the first resonator to be made closely analogous to those of the crystal oscillator used in the second resonator.

Particularly, it is preferred that adjacent crystal blanks on a single wafer be used as the crystal oscillators included in the first and second resonators. The use of adjacent crystal blanks on a single wafer as the crystal oscillators included in the first and second resonators allows the characteristics of the crystal oscillator used in the first resonator to be made more closely analogous to those of the crystal oscillator used in the second resonator.

In the system of detecting tire information, the characteristics of the crystal oscillators included in the first and second resonators include at least temperature characteristics. In this case, since the temperature characteristics of the first resonator is made closely analogous to those of the second resonator, any effect of a variation in the temperature in the tire can be detected with a smaller error, thus allowing accurate detection of the measured value, such as the pressure in the tire.

According to the present invention, it is possible to reduce any effect of information other than the tire information to be measured (for example, any effect of factors including the temperature in the tire) to accurately detect the tire information to be measured, such as the pressure in the tire.

### BRIEF DESCRIPTION OF THE DRAWINGS

Fig. 1 is a diagram schematically showing an example of the circuit configuration of a transponder in a system of detecting tire information according to an embodiment of the present invention;
Fig. 2 is a diagram schematically showing an example of the circuit configuration of a controller in a system of detecting tire information in related art; and
Fig. 3 is a diagram schematically showing an example of the circuit configuration of a transponder in the system of detecting tire information in the related art.

### DESCRIPTION OF THE PREFERRED EMBODIMENTS

An embodiment of the present invention will now be described in detail with reference to the attached drawings. A system of detecting tire information for a vehicle, according to the embodiment of the present invention, includes a controller provided in the body of the vehicle and a measured value transmitter (hereinafter referred to as a "transponder") mounted in a tire of the vehicle, as in the system of detecting tire information (radio transmission system) described in "Description of the Related Art". Although the system of detecting tire information detects a pressure in the tire in the following description, the system may detect, for example, a structural stress of the tire.

The system of detecting tire information according to the embodiment of the present invention differs from the system of detecting tire information in the related art in the configuration of the transponder. The configuration of the controller will be described only in terms of components that are different from those shown in Fig. 2.

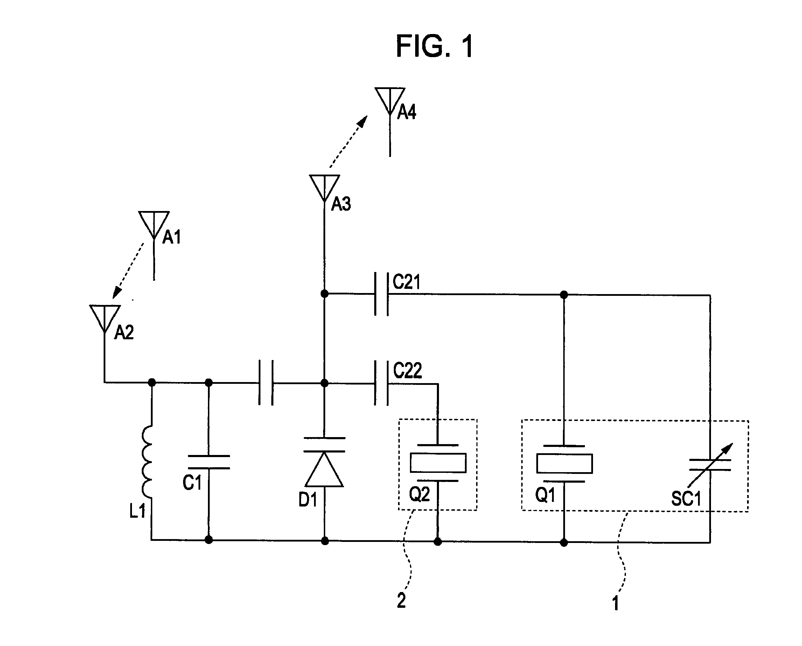

Fig. 1 is a diagram schematically showing an example of the circuit configuration of the transponder in the system of detecting tire information according to the embodiment of the present invention.

As shown in Fig. 1, the transponder according to the embodiment of the present invention differs from transponders in the related art in inclusion of two resonators. One resonator includes a crystal oscillator Q1 for measuring a pressure, as in the transponder in the related art, and the other resonator includes a crystal oscillator Q2 for reference, which the transponder in the related art does not include. The former resonator is hereinafter called a pressure resonator 1 and the latter resonator is hereinafter called a reference resonator 2 for convenience. The pressure resonator 1 functions as a first resonator and the reference resonator 2 functions as a second resonator. The crystal oscillator described above is a representative example of a piezoelectric single-crystal oscillator. A case where the crystal oscillator is used as the piezoelectric single-crystal oscillator will be described in the following description.

The pressure resonator 1 includes the crystal oscillator Q1, a capacitor (not shown), and a capacitive pressure sensor (hereinafter referred to as a "pressure sensor") SC1. The capacitor and the pressure sensor SC1 are connected to the crystal oscillator Q1. The pressure resonator 1 has a resonant frequency of, for example, 9.803 MHz. The resonant frequency of the pressure resonator 1 is varied with the pressure in the tire detected by the pressure sensor SC1. In contrast, the reference resonator 2 includes the crystal oscillator Q2 and a capacitor (not shown) connected the crystal oscillator Q2. The reference resonator 2 has a resonant frequency of, for example, 9.800 MHz. The pressure resonator 1 is connected to an antenna A3 via a coupling capacitor C21 and the reference resonator 2 is connected to the antenna A3 via a coupling capacitor C22, so that the pressure resonator 1 and the reference resonator 2 are affected by each other only in a level that causes no problem of the measurement. Accordingly, the resonant frequency of the reference resonator 2 is not affected by the pressure detected by the pressure sensor SC1. The resonant frequency of the pressure resonator 1 is affected by a variation in the environment in the tire, for example, a variation in the temperature in the tire, in addition to the capacitance of the pressure sensor SC1, which is varied with the pressure in the tire whose measured value is to be yielded. The provision of the reference resonator 2 that does not include the pressure sensor SC1 and the measurement of the resonant frequency of the reference resonator 2 allow only the effect of a variation in the environment to be measured. Consequently, the pressure in the tire from which the effect of a variation in the environment is removed and which is detected by the pressure sensor SC1 can be measured from the resonant frequencies of the two resonators.

The other components of the transponder function similarly to those of the transponder in the related art shown in Fig. 3. Specifically, a low-pass filter L1/C1 functions similarly to the low-pass filter L11/C11 and a varactor diode D1 (hereinafter referred to as a "diode") D1 functions similarly to the diode D11.

In the controller in the system of detecting tire information according to the embodiment of the present invention, unlike the system of detecting tire information in the related art, the oscillator G2 generates an oscillation signal having a frequency f2 close to the resonant frequency of the reference resonator 2 and an oscillation signal having a frequency f3 close to the resonant frequency of the pressure resonator 1. Specifically, the oscillation signal having a center frequency of 9.800 MHz and the oscillation signal having a center frequency of 9.803 MHz are generated, and the carrier wave having the frequency f1 is amplitude-modulated in accordance with the generated oscillation signals. The availability of the amplitude modulation is switched by the switch S1, as in the controller in the

### related art.

According to the embodiment of the present invention, after the carrier wave having the frequency f1 is amplitude-modulated in accordance with the oscillation signal having the frequency f2 (the oscillation signal having a center frequency of 9.800 MHz), the amplitude modulation is stopped. Then, after the carrier wave having the frequency f1 is amplitude-modulated in accordance with the oscillation signal having the frequency f3 (the oscillation signal having a center frequency of 9.803 MHz), the amplitude modulation is stopped. Since the reference resonator 2 continues to oscillate for about one millisecond, as in the transponder in the related art, even after the amplitude modulation in accordance with the former oscillation signal having the frequency f2 is stopped, the non-modulated carrier wave having the frequency f1 is amplitude-modulated by the diode D1 in accordance with a signal having the resonant frequency of the reference resonator 2 and the amplitude-modulated signal is emitted from the antenna A3. Similarly, since the pressure resonator 1 continues to oscillate for about one millisecond even after the amplitude modulation in accordance with the latter oscillation signal having the frequency f3 is stopped, the non-modulated carrier wave having the frequency f1 is amplitude-modulated by the diode D1 in accordance with a signal having the resonant frequency of the pressure resonator 1 and the amplitude-modulated signal is emitted from the antenna A3.

Since the reference resonator 2 and the pressure resonator 1 are provided in the same tire, the resonant frequencies of the reference resonator 2 and the pressure resonator 1 are similarly affected by factors, such as the temperature in the tire. The resonant frequency of the pressure resonator 1 is also affected by a variation in the pressure detected by the pressure sensor SC1. In contrast, the resonant frequency of the reference resonator 2 is not affected by a variation in the pressure detected by the pressure sensor SC1. The controller receives the high-frequency signal amplitude-modulated in accordance with signal having the resonant frequency of the reference resonator 2 and the high-frequency signal amplitude-modulated in accordance with the signal having the resonant frequency of the pressure resonator 1, which resonant frequencies are affected by a variation in the pressure in the above manner. The controller determines a difference in the frequency between the resonant frequency extracted from the former high-frequency signal (hereinafter referred to as a "reference measurement frequency" as needed) and the resonant frequency extracted from the latter high-frequency signal (hereinafter referred to as a "pressure measurement frequency" as needed) to calculate a pressure in the tire. Specifically, a correlation table is created by using the reference measurement frequencies, the pressure measurement frequencies, and the pressures in the tire to determine a pressure in the tire from the correlation table.

Although the difference in the frequency between the reference measurement frequency and the pressure measurement frequency is used to calculate a pressure in the tire, a temperature may be measured from the reference measurement frequency to calculate a pressure on the basis of the correlated data concerning the pressure measurement frequency for every temperature and the measured value of the pressure measurement frequency. In other words, the pressure in the tire is directly or indirectly calculated from the reference measurement frequency and the pressure measurement frequency.

The amplitude modulation of the carrier wave having the frequency f1 in accordance with the oscillation signal having a frequency of 9.800 MHz is shifted in time from the amplitude modulation of the carrier wave having the frequency f1 in accordance with the oscillation signal having a frequency of 9.803 MHz in the controller in the above description. However, the time when the amplitude modulation is performed may be appropriately changed. For example, the amplitude modulation of the carrier wave having the frequency f1 in accordance with the oscillation signal having a frequency of 9.800 MHz may be performed simultaneously with the amplitude modulation of the carrier wave having the frequency f1 in accordance with the oscillation signal having a frequency of 9.803 MHz.

In the measurement of the pressure in the tire in the above manner in the system of detecting tire information according to the embodiment of the present invention, the self resonant frequency of the crystal oscillator Q1 included in the pressure resonator 1 is set so as to roughly coincide with that of the crystal oscillator Q2 included in the reference resonator 2. However, the self resonant frequencies are not limited to the above setting. The self resonant frequency of the crystal oscillator Q1 included in the pressure resonator 1 need not roughly coincide with that of the crystal oscillator Q2 included in the reference resonator 2, as long as the resonant frequencies of the pressure resonator 1 and the reference resonator 2 can be set to the above values.

In the measurement of the pressure in the tire in the above manner, the characteristics of the crystal oscillator included in the pressure resonator 1 are set so as to be closely analogous to those of the crystal oscillator included in the reference resonator 2. The characteristics include the resonant frequency characteristics when the environment is varied and the resonant frequency characteristics involved in the deterioration effects of time on materials and the deterioration in the structure of the resonators. Since the pressure resonator 1 and the reference resonator 2 are provided in the same tire, the pressure resonator 1 and the reference resonator 2 are similarly affected by a variation in the environment in the tire, for example, a variation in the temperature in the tire. However, if the environmental characteristics, for example, the temperature characteristics of the two crystal oscillators used in the two resonators are different from each other even when the pressure resonator 1 and the reference resonator 2 are similarly affected by a variation in the environment in the tire, the resonant frequency of the pressure resonator 1 is not varied similarly to that of the reference resonator 2 under the effect of the variation in the environment in the tire. As a result, despite of the provision of the reference resonator 2, any error can be caused in the calculation of the pressure. The temperature characteristics are particularly important among the characteristics because the crystal oscillators are generally sensitive to the temperature and the temperature in the tire is significantly varied. The main reason for the provision of the reference resonator 2 is to correct any effect of the temperature on the pressure resonator 1. Since an error can be caused in the correction if the crystal oscillator in the pressure resonator 1 has temperature characteristics different from those of the crystal oscillator in the reference resonator 2, the temperature characteristics become important. In addition, it is necessary to take measures against the deterioration effects of time on materials in view of any aging error.

In order to make the characteristics of the crystal oscillator Q1 closely analogous to those of the crystal oscillator Q2, the crystal oscillator Q1 is manufactured in approximately the same manufacturing conditions as those of the crystal oscillator Q2 in the transponder according to the embodiment of the present invention. Normal manufacturing processes of the crystal oscillator will now be roughly described. Conditions for manufacturing the crystal oscillator used in the transponder according to the embodiment of the present invention will also be described.

The manufacturing processes of the crystal oscillator normally include a surface grinding process (Lambert process) for defining the X, Y, and Z axes of an artificial crystal; a wafer cutting process of mechanically cutting the artificial crystal after the Lambert process at a predetermined angle into a wafer-like shape; a first slicing and outlining process of slicing and processing the artificial crystal after the wafer cutting process to produce a wafer; a polishing process for adjusting the thickness of the wafer, which determines the frequency of a crystal blank; a second slicing and outlining process of processing the crystal blank into a specified shape of designed values; a beveling process of cutting the edges in order to centralize the oscillation in the central part of the crystal blank; an etching and cleaning process of chemically removing the processed layer resulting from the polishing and improving the frequency accuracy; a deposition and assembly process of depositing electrodes on the crystal blank and fixing the crystal blank having the electrodes deposited thereon in a retainer with conductive adhesive; a frequency adjustment and sealing process of adjusting the thickness of the electrodes while causing the crystal blank to oscillate to adjust the frequency; and a complete test process of testing the characteristics including the air-tightness, insulation performance, frequency characteristics, and impedance.

In the second cutting and outlining process in the manufacture of the crystal oscillator according to the embodiment of the present invention, for example, the crystal blank having a size corresponding to the two crystal blanks finally used as the crystal oscillators is produced. After the beveling process and the etching and cleaning process, the two electrodes are deposited on the crystal blank in the deposition and assembly process. Then, the crystal blank is divided into two in a third cutting and outlining process and the crystal blanks resulting from the division are fixed in the retainer with the conductive adhesive. Since the crystal blanks used as the two crystal oscillators are arranged side by side and manufactured in the same manufacturing processes until the third cutting and outlining process, it is possible to make the characteristics of the crystal oscillators closely analogue to each other. The crystal blanks may be fixed in different retainers or in the same retainer.

The crystal blanks used as the crystal oscillators Q1 and Q2 are manufactured from one crystal blank on a single wafer in the above example. However, as apparent from the relationship between the manufacturing processes and the characteristics, for example, the respective crystal oscillators may be manufactured from adjacent two crystal blanks on a single wafer, instead of manufacturing the two crystal oscillators from one crystal blank, and the crystal oscillators may be used as the crystal oscillator Q1 in the pressure resonator 1 and the crystal oscillator Q2 in the reference resonator 2. The two crystal oscillators manufactured from different crystal blanks which place parts on a single wafer may also be used, although the performance can be degraded in some degree.

Although the crystal oscillator Q1 and the crystal oscillator Q2 made of crystal are used as the piezoelectric single-crystal oscillators in the pressure resonator 1 and the reference resonator 2 in the embodiment of the present invention described above, the piezoelectric single-crystal oscillators are not limited to the oscillators made of crystal. For example, oscillators resulting from processing of piezoelectric single crystals of lithium tantalate (LiTaO₃), lithium niobate (LiNbO₃), lithium borate (Li₂B₄O₇), potassium niobate (KNbO₃), langasite (La₃Ga₅SiO₁₄), or langanite (La₃Nb_{0.5}Ga_{5.5}O14) or solid solution single crystals of zinc lead niobate-lead titanate may be used in the pressure resonator 1 and the reference resonator 2. Since multiple oscillators are manufactured from the wafer, as in the crystal oscillators, two oscillators having analogous characteristics can be yielded in the manufacturing process and can be used as the piezoelectric single-crystal oscillators according to the embodiment of the present invention. In order to make the characteristics of the oscillators closely analogous to each other in the manufacturing process, a method that is similar to that of the crystal oscillators but is varied depending on the used material can be adopted. Since the crystal oscillators have a Q factor higher than the Q factors of other piezoelectric single-crystal oscillators, the return frequency is rather constant and, therefore, the stable measurement can realized. Consequently, the crystal oscillators are most suitable for providing the system of detecting tire information having a higher measurement accuracy.

As described above, in the system of detecting tire information according to the embodiment of the present invention, the transponder includes the pressure resonator 1 with the pressure sensor and the reference resonator 2 without the pressure sensor, and the controller transmits the signal used for the resonance of the reference resonator 2 and the pressure resonator 1 and receives the signals modulated in accordance with the resonant frequencies of the two resonators from the transponder to calculate a measured value on the basis of the difference in the frequency between the resonant frequencies of the reference resonator 2 and the pressure resonator 1, extracted from the signals. In addition, the characteristics of the crystal oscillator Q1 in the pressure resonator 1 are made closely analogous to those of the crystal oscillator Q2 in the reference resonator 2.

Since the characteristics of the crystal oscillator Q1 in the pressure resonator 1 are made closely analogous to those of the crystal oscillator Q2 in the reference resonator 2, the resonant frequencies of both of the resonators are similarly affected by any variation in the temperature in the tire or any deterioration with age of the crystal oscillators. The calculation of the measured value in accordance with the resonant frequencies of the pressure resonator 1 and the reference resonator 2 allows the effect of factors including the temperature in the tire to be removed, so that the measured value, such as the pressure in the tire, can be accurately detected.

The crystal blanks used as the crystal oscillator Q1 in the pressure resonator 1 and the crystal oscillator Q2 in the reference resonator 2 are manufactured from a single wafer or a single crystal blank in the system of detecting tire information according to the embodiment of the present invention. The manufacture of the crystal blanks in this manner can make the characteristics of the crystal oscillator in the pressure resonator 1 closely analogous to those of the crystal oscillator in the reference resonator 2.

It will be further understood by those skilled in the art that the foregoing description is of the preferred embodiments of the present invention, that the sizes or shapes shown in the attached drawings are only examples, and that various changes and modifications may be made to the invention without departing from the spirit and scope thereof.

## Claims

1. A system of detecting tire information, the system comprising:
a measured value transmitter that includes a first resonator with a pressure sensor and a second resonator without the pressure sensor and that is mounted in a tire of a vehicle; and
a controller that is provided in the body of the vehicle and that transmits a signal used for resonance of the first and second resonators to the measured value transmitter and receives from the measured value transmitter a signal associated with the resonant frequency of the first resonator and a signal associated with the resonant frequency of the second resonator to calculate a measured value on the basis of the resonant frequencies of the first and second resonators, extracted from both of the signals,
wherein, in the measured value transmitter, characteristics of a piezoelectric single-crystal oscillator included in the first resonator are made closely analogous to those of a piezoelectric single-crystal oscillator included in the second resonator.

2. The system of detecting tire information according to Claim 1,
wherein the piezoelectric single-crystal oscillators included in the first and second resonators are crystal oscillators.

3. The system of detecting tire information according to Claim 2,
wherein crystal blanks used as the crystal oscillators included in the first and second resonators are manufactured from a single wafer.

4. The system of detecting tire information according to Claim 2,
wherein adjacent crystal blanks on a single wafer are used as the crystal oscillators included in the first and second resonators.

5. The system of detecting tire information according to Claims 2,
wherein the characteristics of the crystal oscillators included in the first and second resonators include at least temperature characteristics.
